# EUROPEAN PATENT SPECIFICATION

(11) **EP 2 378 870 B1**
(45) Date of publication and mention of the grant of the patent: **19.11.2014**
(21) Application number: 09764425.6
(22) Date of filing: 03.12.2009
(51) Int. Cl.: A01N 25/34, A01N 33/04, A01P 1/00, C08F 8/02, C08F 8/12, C08J 7/04, C09D 5/16, C09D 129/04

(54) **ANTIMICROBIAL COPOLYMER FOR COATING SURFACES, OBTAINED BY DERIVATIZATION OF A VINYLAMINE-VINYLALCOHOL COPOLYMER**
ANTIMIKROBIELLES COPOLYMER FÜR DIE BESCHICHTUNG VON OBERFLÄCHEN, HERSTELLBAR DURCH UMSETZUNG EINES VINYLAMIN-VINYLALCOHOL-COPOLYMERS
COPOLYMERE ANTIMICROBIEN POUR LE RECOUVREMENT DE SURFACES, PREPARE PAR DERIVATISATION D'UN COPOLYMERE DE VINYLAMINE ET VINYLALCOOL

(30) Priority: 29.12.2008 US 141077 P
(43) Date of publication of application: 26.10.2011
(73) Proprietor: 3M Innovative Properties Company, Saint Paul, MN 55133-3427 (US)
(72) Inventor: STOFKO, John, J., Jr., Saint Paul, MN 55133-3427 (US)
(74) Representative: Vossius & Partner
(86) International application number: PCT/US2009/066491
(87) International publication number: WO 2010/077539

(56) References cited:
- EP-A1- 1 178 056
- WO-A1-00/69934
- WO-A1-01/14435
- JP-A- 9 324 094

## Description

### FIELD

The present disclosure relates to polymers having antimicrobial and water repellent properties, coatings containing such polymers and articles coated therewith.

### BACKGROUND

Surface contamination by various microorganisms can give rise to serious infections when a susceptible host comes in contact with the contaminated surface. Infections arising from medical implants, medical equipment (e.g., catheters) and contaminated surfaces in health care facilities result in billions of dollars of additional treatment costs. Contamination of foods that come in contact with surfaces contaminated with pathogenic bacteria in food processing facilities, food distribution centers, and public eating establishments and even in homes can also result in serious illness and costly food recalls.

Prevention of illness via contaminated surfaces can be diminished by simple surface cleaning. However, this can be complicated in highly trafficked areas where it becomes difficult to maintain the cleanliness of highly touched surfaces. There are numerous cleaning products on the market that leave a reside of an antimicrobial compound on the surface after cleaning. While these materials can be effective for a short period of time, they are easily rubbed off and in many instances provide an unsightly hazy appearance and an unwelcome greasy feel.

The international patent applications WO00/69934 and WO01/14435 disclose antimicrobial copolymers for coating surfaces, which have alkylated amino groups as the active moieties.

### BRIEF SUMMARY

The present invention is as described in the appended claims.

Disclosed herein is a composition that includes the reaction product of at least a vinylamine-vinyl alcohol copolymer; an epoxyalkane; and a fluorocarbon that includes a reactive portion capable of reacting with the vinylamine-vinyl alcohol copolymer , wherein the molar amount of the combination of the epoxyalkane and the fluorocarbon is less than or equal to the molar amount of the vinylamine.

Also disclosed herein is an article that includes a substrate; and a coating adjacent to the substrate, the coating including the reaction product of at least a vinylamine-vinyl alcohol copolymer; an epoxyalkane,; and a fluorocarbon that includes a reactive portion capable of reacting with the vinylamine-vinyl alcohol copolymer, wherein the molar amount of the combination of the epoxyalkane and the fluorocarbon is less than or equal to the molar amount of the vinylamine.

Also disclosed herein is a method of preparing an antimicrobial surface, a water repellent surface, or both, the method including providing a substrate; and applying a coating composition to at least a portion of one surface of the substrate, the coating composition including a polar organic solvent; water; and a reaction product of a vinylamine-vinyl alcohol copolymer, an epoxyalkane, and a fluorocarbon that includes a reactive portion capable of reacting with the vinylamine-vinyl alcohol copolymer. Upon application of the coating composition to the substrate, the polar organic solvent functions to at least partially disinfect the surface of the substrate.

Also disclosed herein is a method of preparing an antimicrobial polymeric material, the method including forming a vinylamine-vinyl alcohol copolymer solution in a cosolvent, the cosolvent including water and a first polar organic solvent; adding an epoxyalkane to the vinylamine-vinyl alcohol copolymer solution, forming a reaction solution; adding a fluorocarbon to the reaction solution, the fluorocarbon including a reactive portion capable of reacting with the vinylamine-vinyl alcohol copolymer, wherein the molar amount of the combination of the epoxyalkane and the fluorocarbon is less than or equal to the molar amount of the vinylamine; and adding further polar organic solvent to the reaction solution, wherein the further polar organic solvent is added in order to maintain solubility of the components in the reaction solution.

### DETAILED DESCRIPTION

All scientific and technical terms used herein have meanings commonly used in the art unless otherwise specified. The definitions provided herein are to facilitate understanding of certain terms used frequently herein and are not meant to limit the scope of the present disclosure.

The recitation of numerical ranges by endpoints includes all numbers subsumed within that range (e.g. 1 to 5 includes 1, 1.5, 2, 2.75. 3, 3.80. 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

Disclosed herein are compositions, coatings including such compositions, and articles at least partially coated with such compositions. The compositions and coatings containing such compositions have advantageous properties, such as antimicrobial properties, water repellent properties, or a combination thereof.

"Antimicrobial properties" or the term "antimicrobial" refers to material that kills microorganisms or inhibits their growth. Various methods and tests can be conducted to determine if a material has antimicrobial properties. Antimicrobial properties include antibacterial, antifungal and antiviral properties. Exemplary tests are discussed and utilized in the Examples that follow.

"Water repellent properties" or the term "water repellent" refers to materials that are at least somewhat hydrophobic. A coating that renders a surface water repellent or gives it water repellent properties makes the surface more hydrophobic than it would be without the coating present. One method of measuring the hydrophobicity of a surface and therefore determining if it has water repellent properties is contact angle. Various machines and devices can be utilized to measure contact angle. An exemplary device is utilized in the examples that follow.

Compositions as disclosed herein can include the reaction product of at least a vinylamine-vinyl alcohol copolymer; an epoxyalkane; and a fluorocarbon.

A copolymer, as that term is used herein, refers to a polymer that is formed from two or more monomers. Copolymers can be alternating copolymers, periodic copolymers, random copolymers or block copolymers. An alternating copolymer is a copolymer with regular alternating units (e.g. A-B-A-). A periodic copolymer is a copolymer with units arranged in repeating sequences (e.g. (A-B-A-B-B-A-A-A)ₙ). A random copolymer is a copolymer having random sequences of the monomeric units. A block copolymer includes two or more homopolymer subunits linked by covalent bonds. The union of the homopolymers may require an intermediate, non-repeating subunit, known as a junction block. Block copolymers with two or three distinct blocks are called diblock copolymers and triblock copolymers respectively.

Vinylamine-vinyl alcohol copolymers utilized herein can be alternating copolymers, periodic copolymers, random copolymers, block copolymers, or a combination thereof. Vinylamine-vinyl alcohol copolymers utilized herein can be formed using any known methods or starting materials. An exemplary method of forming vinylamine-vinyl alcohol copolymers can be found in U.S. Patent No. 6,559,227. This exemplary method of forming a vinylamine-vinyl alcohol copolymer utilizes a precursor copolymer that includes N-vinylamide and vinyl acetate units. The N-vinylamide units can be provided by N-vinylformamide monomers or N-vinylacetamide monomers. The precursor copolymer is subjected to hydrolysis to form the vinylamine-vinyl alcohol copolymer.

Vinylamine-vinyl alcohol copolymers that can be used herein can have various different amounts of vinylamine and vinyl alcohol units. It is thought, but not relied upon that the vinylamine units function to provide reactive groups where the epoxyalkanes and fluorocarbon components can be attached. Vinylamine-vinyl alcohol copolymers have solubility properties that are similar to polyvinyl alcohol, i.e., they are soluble in water or water/polar solvent mixtures. As the amount of vinylamine units in the vinylamine-vinyl alcohol copolymer increases, the copolymer will more readily dissolve in water at low pHs. For applications where it is desired that the reaction product not be soluble in water, the relative amount of vinyl alcohol units can be increased, which tends to decrease the solubility of the reaction product in water.

In an embodiment, the vinylamine-vinyl alcohol copolymer can have a molar ratio of vinylamine units to vinyl alcohol units of from 1:99 to 50:50. In an embodiment, the vinylamine-vinyl alcohol copolymer has a molar ratio of vinylamine units to vinyl alcohol units of from 5:95 to 50:50. In an embodiment, a vinylamine-vinyl alcohol copolymer commercially available from Mitsubishi Chemical Corporation under the trade designation DIAFIX C-631 (CAS Registry No. 167747-79-7) can be utilized. DIAFIX C-631 has about 13 mol% (mole percent) vinylamine units and about 87 mol% vinyl alcohol units. Other vinylamine-vinyl alcohol copolymers could also be utilized.

The vinylamine-vinyl alcohol copolymer can optionally include other monomer units (besides the vinylamine and vinyl alcohol). Generally, if such optional monomer units are included, the amount is usually 30 mol% or less based on the total monomer units.

The vinylamine-vinyl alcohol copolymer discussed above is reacted with an epoxyalkane and a fluorocarbon. The vinylamine-vinyl alcohol copolymer, epoxyalkane and the fluorocarbon can be referred to herein as reaction components or reagents. Generally, the epoxyalkane and fluorocarbon are covalently bonded to at least some of the vinylamine units of the vinylamine-vinyl alcohol copolymer forming a "modified vinylamine-vinyl alcohol copolymer".

It is thought, but not relied upon, that the epoxyalkane adduct can provide antimicrobial properties to the final product. One or more than one kind (e.g. a mixture of two or more) epoxyalkanes can be utilized herein. Epoxyalkanes as described herein are a group of compounds that include an epoxide functional group (a cyclic ether with only three ring atoms) and an alkyl functional group (either straight or branched). When the epoxyalkane is reacted with the vinylamine-vinyl alcohol copolymer, the epoxide group of the epoxyalkane opens and allows the epoxyalkane to react with the amine group of the vinylamine-vinyl alcohol copolymer to attach the epoxyalkane to the vinylamine-vinyl alcohol copolymer backbone.

When referring to the number of carbons in an epoxyalkane, the number includes the carbons that make up the epoxide functional group. For example, epoxyoctane (C₈H₁₆O; Formula I below) can be considered a C₈ epoxyalkane. Epoxyalkanes that can be utilized herein can include those having at least 4 carbon atoms, at least 6 carbon atoms, at least 8 carbon atoms, or at least 10 carbon atoms. The epoxyalkanes can include those having up to 28 carbon atoms, up to 24 carbon atoms, up to 20 carbon atoms, up to 18 carbon atoms, or up to 12 carbon atoms. For example, the epoxyalkanes can be C₄-C₂₈ epoxyalkanes. In an embodiment, epoxyalkanes that can be utilized herein can include C₄ to C₁₈ epoxyalkanes. In an embodiment, epoxyalkanes that can be utilized herein can include C₆ to C₁₈ epoxyalkanes. In an embodiment, epoxyalkanes that can be utilized herein can include C₈ to C₁₂ epoxyalkanes. Specific, exemplary expoxyalkanes that can be utilized include, but are not limited to, epoxyoctane (C₈ epoxyalkane), epoxydodecane (C₁₂ epoxyalkane),

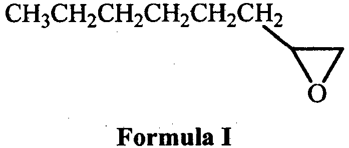

As discussed above, the vinylamine-vinyl alcohol copolymer is reacted with an epoxyalkane and a fluorocarbon. One or more than one (e.g. a mixture of two more) fluorocarbons can be utilized. It is thought, but not relied upon, that the fluorocarbon provides water repellent properties to the final product. Fluorocarbon, as utilized herein, refers to carbon containing compounds that have at least one hydrogen atom attached to a carbon atom replaced with a fluorine atom. In an embodiment, the fluorocarbon is a perfluorocarbon, which refers to a compound where all hydrogen atoms that are directly attached to a carbon atom that is part of an alkane group are replaced with fluorine atoms.

When the fluorocarbon compound is reacted with the vinylamine-vinyl alcohol copolymer, a reactive portion of the fluorocarbon allows it to be attached to the vinylamine-vinyl alcohol copolymer backbone. Exemplary fluorocarbons that can be utilized herein can include esters, carboxylic acids, or epoxies. An ester affords linkage of the fluorocarbon to the vinylamine-vinyl alcohol copolymer by an amide linkage through the vinylamine units. A carboxylic acid would also provide an amide linkage to the vinylamine units of the vinylamine-vinyl alcohol copolymer. An epoxy would provide a beta-hydroxyalkylfluorocarbon linkage to the copolymer. In an embodiment, a fluorocarbon including an ester is utilized. In embodiments where carboxylic acids or epoxies are utilized, longer reaction times, different reaction procedures, or a combination thereof may be advantageous or necessary. One skilled in the art would be aware of such modifications.

Fluorocarbon compounds that can be utilized herein can be described by the number of carbons present in the compound on the fluorinated side of the functionality (e.g. ester, carboxylic acid or epoxy). For example, methylperfluorooctanoate (C₉H₃F₁₅O₂; **Formula II** below) can be considered a C₇ fluorocarbon; while methyl perfluorooctanoic acid (C₈HF₁₅O₂; **Formula III** below) can also be considered a C₇ fluorocarbon. Fluorocarbons that can be utilized herein can include C₄ to C₁₈ fluorocarbons. In an embodiment, fluorocarbons that can be utilized herein can include C₄ to C₈ fluorocarbons. Specific, exemplary fluorocarbons that can be utilized include, but are not limited to, methyl perfluorooctanoate and heptafluorobutyrate for example.

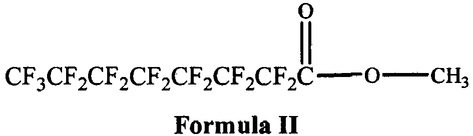

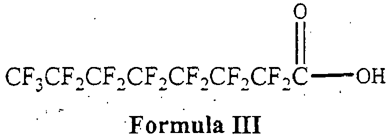

The amounts of the various components can be considered with respect to the amount of reactive locations on the vinylamine-vinyl alcohol copolymer and the amount of reactive components to attach. The epoxyalkane and fluorocarbon compounds can be considered together as they both will react with the vinylamine units of the vinylamine-vinyl alcohol copolymer. The molar amount of the combination of the epoxyalkane and the fluorocarbon is less than or equal to the molar amount of the vinylamine units in the vinylamine-vinyl alcohol copolymer. An excess of the combination of the epoxyalkane and the fluorocarbon could produce derivatives in solution that would not be attached to the copolymer. In an embodiment where the vinylamine-vinyl alcohol copolymer has about 13 mol% of vinylamine units, the combination of the epoxyalkane and fluorocarbon can generally be about 13 mol% or less. In an embodiment, the amount of epoxyalkane and fluorocarbon are chosen so that there are no unreacted epoxide or fluorocarbon entities remaining, however, unreacted vinylamine units can remain.

The amounts of epoxyalkane and fluorocarbons to be reacted with the vinylamine-vinyl alcohol copolymer can be chosen based at least in part on the properties that are desired in the final product. Generally, the amounts of the epoxyalkane and the fluorocarbon are a tradeoff between the antimicrobial properties provided by the epoxyalkane and the water repellent properties provided by the fluorocarbon. The molar ratio of epoxyalkane to fluorocarbon can be at least 1:1, at least 1.5:1, or at least 2:1. The molar ratio can be up to 4:1, up to 3.5:1, or up to 3:1. In an embodiment, the molar ratio of epoxyalkane to fluorocarbon is from 4:1 to 1:1. In an embodiment, the molar ratio of epoxyalkane to fluorocarbon is from 3:1 to 1:1.

The combination of a polymer that is both water repellent and antimicrobial is surprising. The ability of a hydrophobic surface to be antimicrobial is in itself a surprise. For a non-leaching surface to be antimicrobial, one of skill in the art typically assumes that the microbes have to be brought into contact with the antimicrobial surface in order to be affected by the antimicrobial surface. However, in a hydrophobic surface where water containing the microbes tends to bead up, thereby increasing the thickness of the water layer, contact of the microbes with the antimicrobial surface is less likely. Furthermore, numerous antimicrobial polymer backbones have lost their antimicrobial properties once modified. For example, antimicrobial polymers with quaternary ammonium modifications have provided little or no antimicrobial activity. It was thought that this could have been due to a change in the conformation of the polymer or chemical interactions that caused sequestration of the antimicrobial moiety. Given that observation, it is surprising that a modification of the polymer backbone, like that being undertaken here would still provide a polymer with antimicrobial properties.

The reaction of the vinylamine-vinyl alcohol copolymer, an epoxyalkane and a fluorocarbon (which are referred to herein as "reaction components") can be carried out as would be known to one of skill in the art. In an embodiment, the three (or more) reaction components can be added simultaneously. In an embodiment, one or more than one of the reaction components can be added stepwise as the reaction progresses. Stepwise addition can be undertaken because of relative reactivities of the reaction components, solubility concerns, other concerns not discussed herein, or some combination thereof. In an embodiment, the vinylamine-vinyl alcohol copolymer can first be combined with the epoxyalkane to form a vinylamine epoxyalkane-vinyl alcohol copolymer solution, which can then be combined with the fluorocarbon to complete the reaction.

In an embodiment, reaction of the vinylamine-vinyl alcohol copolymer with the epoxyalkane first modifies the solubility of the copolymer. This can make it easier, or in some cases possible to increase the amount of polar organic solvent in the reaction solution. A higher relative amount of polar organic solvent may be advantageous when adding the fluorocarbon, which is often dissolved in an organic solvent, to avoid or minimize phase separation of the mixture.

The reaction of the vinylamine-vinyl alcohol copolymer, an epoxyalkane and a fluorocarbon can be carried out in a solvent. A single solvent, or more than one solvent can be utilized. In an embodiment, more than one solvent is utilized. In an embodiment, water and at least one polar organic solvent are utilized. In an embodiment, water and an alcohol are utilized. Other polar organic solvents that can be utilized include, but are not limited to, dimethylformamide (DMF) and dimethyl sulfoxide (DMSO) for example. Further solvents can also be included, for example, a third solvent can be included in a composition that provides one or more of the reaction components. For example, dioxolane or similar solvents can be utilized as a solvent for the fluorocarbon.

In an embodiment that utilizes stepwise addition of one or more than one of the reaction components, a multi solvent system can be advantageously utilized (for example water and a polar organic solvent such as an alcohol). In such circumstances, the relative amounts of the two (or more) solvents can be changed while the reaction progresses, based on the addition of the one or more reaction components, or some combination thereof. For example, it may be beneficial to begin a reaction with a solvent mixture that has a relatively higher water content and progressively add a polar organic solvent so that the final solvent has a relatively higher polar organic solvent content. This may be beneficial when the initial reaction components are relatively soluble in water, but the later added reaction components, the final reaction product or both are less soluble in water and more soluble in a polar organic solvent. In some examples of such a scheme, the beginning solvent mixture is 60 to 80 wt% water and 40 to 20 weight percent polar organic solvent that is stepwise modified to become a solvent mixture that is 25 to 45 wt% water and 75 to 55 weight percent polar organic solvent. In other examples of such a scheme, the beginning solvent mixture is 65 to 75 wt% water and 35 to 45 wt% polar organic solvent that is stepwise modified to become a solvent mixture that is 30 to 40 wt% water and 70 to 60 wt% polar organic solvent. A specific example of such a scheme is evidenced by a beginning solvent mixture of approximately 70 wt% water and 30 wt% ethanol that is stepwise modified to become a solvent mixture of approximately 35 wt% water and 65 wt% ethanol.

Other optional components can also be added to the reaction components. Such optional components can be added in order to affect various modifications or alterations of the modified vinylamine-vinyl alcohol copolymer, the solution containing the modified vinylamine-vinyl alcohol copolymer or the properties of a coating containing the modified vinylamine-vinyl alcohol copolymer. Exemplary components include, but are not limited to, additives that can affect certain properties of the modified vinylamine-vinyl alcohol copolymer, such as for example crosslinking agents.

Optional components can also be added in order to affect various modifications or alterations of solutions (or coatings) containing the modified vinylamine-vinyl alcohol copolymer. Exemplary properties to be altered include, but are not limited to the color of a solution or coating, the opacity of a solution or coating, solubility of the polymer and coatings, wetting of substrates by the polymer solution and adhesion of coatings to various substrates for example. In an embodiment, the addition of an acid to the composition can minimize phase separation of the modified vinylamine-vinyl alcohol copolymer, which can in turn reduce haze of a coating formed from the composition. Any type of acid can be utilized. Exemplary acids include, for example, acetic acid and carbonic acid (which can be formed by bubbling CO₂ into the composition).

Optional components can also be added to modify the effectiveness of the composition or coating thereof. For example, the antimicrobial properties of a composition or a coating thereof could be altered. An exemplary component that could be included to effect or alter the antimicrobial properties include metal ions and quaternary ammonium cations. Metal ions, for example silver ions (Ag⁺)could be added in order to offer a different and supplemental method of providing antimicrobial activity. Addition of a metal ion or quaternary ammonium cation could also advantageously make a coating function as a leaching coating, because the metal ion or quaternary ammonium cation could leach from the coating over time.

Also disclosed herein is a method of preparing an antimicrobial polymeric material that includes stepwise addition of at least one solvent as the reaction progresses. The stepwise addition of the at least one solvent can function to maintain the solubility of the reaction components, modified vinylamine-vinyl alcohol copolymer or a combination thereof as the reaction progresses. In an embodiment, such a method can include forming a vinylamine-vinyl alcohol copolymer solution in a cosolvent, the cosolvent including at least water and a polar organic solvent; adding an epoxyalkane to the vinylamine-vinyl alcohol copolymer solution, forming a reaction solution; adding a fluorocarbon to the reaction solution; and adding further polar organic solvent to the reaction solution, wherein the further polar organic solvent is added in order to maintain solubility of the components, the modified vinylamine-vinyl alcohol copolymer or a combination thereof in the reaction solution.

In an embodiment, the epoxyalkane can be added in a polar organic solvent that can, but need not be the same as the polar organic solvent in the cosolvent. In an embodiment, the fluorocarbon can be added in a polar organic solvent that can, but need not be the same as the polar organic solvent in the cosolvent. In an embodiment, the further polar organic solvent can be added when the epoxyalkane is added, when the fluorocarbon is added, or both. In an embodiment, further polar organic solvent can be added when the epoxyalkane is added, when the fluorocarbon is added, at a different time, or a combination thereof.

A final solvent mixture that is a mixture of ethanol (or another alcohol) and water can offer additional benefits because its inclusion in a coating composition can offer the advantage of disinfecting a surface on which it is applied. For example, the solvent mixture can include 55 to 75 wt% ethanol and 45 to 25 wt% water or 60 to 70 wt% ethanol and 40 to 30 wt% water. More specifically, a solvent mixture of about 65 wt% ethanol and 35 wt% water can function as a disinfectant when applied (with or without the reaction product) to a surface.

A composition as disclosed herein can be utilized to form a coating. The composition can be coated directly from the solution in which the reaction of the reaction components was carried out, or can be further processed. In an embodiment, the composition is coated by applying the reaction solution (including any solvent or solvents, and additional components) without any further processing. The composition can be coated onto any substrate or portion of any substrate that is desired to be antimicrobial and water repellent.

Substrates that can be coated with compositions disclosed herein are virtually limitless. Exemplary substrates include inorganic materials, including but not limited to, glass, ceramics, metals, metal oxides, natural and man-made stones, concrete; and organic materials, including but not limited to, polymeric materials, woven and non-woven fabrics, wood, skin, and food surfaces.

Any portion of a substrate can be coated with a composition as disclosed herein; a portion of one or more surfaces of a substrate, a portion of all surfaces of a substrate, or all portions of all surfaces of a substrate. Generally, once a composition as disclosed herein is applied to at least a portion of at least a surface of a substrate it forms a coating or a layer that is located adjacent (or directly adjacent) to the substrate. The coating can have any useful thickness. In an embodiment, the coating can have a thickness from about 0.005 to about 1 mil. In an embodiment, thinner coatings may be advantageous because less material is utilized.

A coating of the reaction product can also be crosslinked. A crosslinked material may offer greater durability than a non-crosslinked coating but may in turn make it more difficult to clean off a surface. Known methods of crosslinking can be utilized. For example, the coating can be physically crosslinked or chemically crosslinked. Crosslinking can be initiated by heat, pressure, or radiation for example. A number of chemical cross-linkers as are commonly utilized by those of skill in the art can be utilized herein, including but not limited to, bis (or multifunctional) epoxides, bis (or multifunctional) aldehydes, bis (or multifunctional) isocyanates and bis (or multifunctional) acid anhydrides for example. The choice of the particular crosslinker can depend on a number of factors, including but not limited to, the desired level of crosslinking, the polymer to be crosslinked, concerns regarding pot-life of solutions, other factors, or a combination thereof.

Coatings that are formed from compositions as disclosed herein can have antimicrobial properties, water repellent properties, or a combination thereof.

In an embodiment, coatings formed from a composition as disclosed herein can effect at least 90% reduction of *Staphylococcus aureus, Pseudomonas aeruginosa,* or a combination thereof. In an embodiment, coatings formed from a composition as disclosed herein can effect at least 95% reduction *of S. aureus, P. aeruginosa,* or a combination thereof. In an embodiment, coatings formed from a composition as disclosed herein can effect at least 99% reduction *of S. aureus, P. aeruginosa,* or a combination thereof. In an embodiment, coatings formed from a composition as disclosed herein can effect at least 99.9% reduction *of S. aureus, P. aeruginosa,* or a combination thereof. In an embodiment, coatings formed from a composition as disclosed herein can effect at least 99.99% reduction *of S. aureus, P. aeruginosa,* or a combination thereof. In an embodiment, such reductions are of both *S. aureus* and *P. aeruginosa.*

In an embodiment, a coating formed from a composition as disclosed herein can render a hydrophilic surface more hydrophobic. For example, a coating formed from a composition as disclosed herein can render a glass surface more hydrophobic. In an embodiment, a coating formed from a composition as disclosed herein can render a glass surface at least about 50% more hydrophobic, at least about 60% more hydrophobic, or at least about 70% more hydrophobic. In an embodiment, a coating formed from a composition as disclosed herein can render a polyethylene (PET) surface more hydrophobic. In an embodiment, a coating formed from a composition as disclosed herein can render a polyethylene (PET) surface at least about 5% more hydrophobic. In an embodiment, a coating formed from a composition as disclosed herein can render a polyethylene (PET) surface at least about 10% more hydrophobic.

In an embodiment, a coating formed from a composition as disclosed herein can also render a surface anti-fouling. As used herein, the term "fouling" refers to the attachment and growth of microorganisms and small organisms on a substrate. Accordingly, the term "anti-fouling" refers to the effect of preventing, reducing and/or eliminating fouling. Coatings that render surfaces anti-fouling can be important for a number of applications, including but not limited to, heating, ventilating and air conditioning (HVAC) systems, surfaces in water distribution systems, surfaces in manufacturing equipment (e.g. those exposed to significant moisture, such as paper manufacturing), household surfaces (e.g. tile grout, drains) and marine surfaces for example.

Methods of preparing an antimicrobial surface, a water repellent surface, or a combination thereof are also disclosed herein. Generally, the method includes providing a substrate, and applying a coating that includes the reaction product of at least a vinylamine-vinyl alcohol copolymer, an epoxyalkane, and a fluorocarbon. The coating can be applied with commonly utilized coating methods. The particular coating method chosen can depend at least in part on the particular substrate that is being coated.

Exemplary methods of coating include, but are not limited to, knife coating, immersion (dip) coating, gap coating, curtain coating, rotary screen coating, reverse roll coating, Gravure coating, metering rod (Meyer bar) coating, slot die (extrusion) coating, and spray coating. In an embodiment, the particular coating method chosen can depend at least in part on characteristics of the particular substrate to be coated. Characteristics that can affect the coating method chosen include, but are not limited to the regularity or irregularity of the surface (e.g. a substrate having an irregular surface may be advantageously coating using immersion coating while a substrate having a very regular surface may be advantageously coated with another method), the material making up the substrate, the size of the substrate and other features of the substrate not discussed herein.

In an embodiment, a coating composition can be applied to at least a portion of at least one surface of the substrate, such a coating composition can include a polar organic solvent, water, and a reaction product of a vinyl amine-vinyl alcohol copolymer, an epoxyalkane and a fluorocarbon. As discussed above, such a multi component solvent system can offer advantages with regard to the solubility of the substituted copolymer. The coating composition can have a variable percent solids. The percent solids in the coating composition can affect the viscosity of the coating composition and the ability to coat the coating composition using a desired coating method. In coating compositions that include reaction products having lower molecular weights, higher percent solids can be coated using commonly utilized coating methods. In an embodiment, a coating composition can have a percent solids of not greater than about 50 wt%. In an embodiment a coating composition can have a percent solids of not greater than about 40 wt%, not greater than 30 wt%, not greater than 25 wt%, not greater than 20 wt%, not greater than 15 wt%, or not greater than 10 wt%. The solids are typically at least 0.01 wt%, at least 0.1 wt%, at least 0.5 wt%, or at least 1 wt%. In an embodiment, a coating composition can have a percent solids between about 0.01% and about 50%. In an embodiment, a coating composition can have a percent solids between about 0.1 wt% and about 20 wt% or between about 0.1 wt% and about 10 wt%.

In coating compositions that include alcohol and water, for example ethanol and water, application of the coating composition can function to at least partially disinfect the surface of the substrate it is applied to. A mixture of ethanol and water, as well as water and other polar organic solvents, (whether it contains further components or not) can have antimicrobial properties on its own. Therefore, application of a coating composition containing ethanol and water can function to immediately disinfect at least a portion of at least part of a surface of the substrate. This property can combine with the ongoing antimicrobial properties of the substituted copolymer to provide advantageous antimicrobial properties to the substrate.

The coatings are often clear and can be applied to substrates without altering the appearance of the substrate. That is, the surface of various substrates can be made antimicrobial, water repellent, or a combination thereof without altering the appearance of the substrate.

Polymeric antimicrobial coatings as disclosed herein can offer numerous advantages, including but not limited to, longer endurance on surfaces which therefore lead to less likelihood of transferring to items that contact the surface (e.g. hands, cleaning materials, etc.), simple and inexpensive to manufacture which therefore make them cost effective to utilized on numerous contact surfaces, and the combination of providing antimicrobial properties and water repellency.

### EXAMPLES

### Materials and Methods:

Unless otherwise noted, all chemicals were obtained from Aldrich and were used without further purification.

A DIAFIX C631/epoxyoctane (3:1) base copolymer solution was prepared by adding 20 grams of ethanol to 60 grams of 10 wt% DIAFIX C-631 (Mitsubishi Chemical Corporation, Tokyo, Japan) in water as the mixture was rapidly stirred. The mixture was heated to gentle reflux with stirring and then another 20 grams of ethanol with 1.0 gram of epoxyoctane was added over a period of 15 minutes. This mixture was stirred at reflux for 1 hour and then another 20 grams of ethanol with 1.0 gram of epoxyoctane was added drop wise with rapid stirring over a half hour period. The mixture was allowed to stir for 48 hours at gentle reflux and then an additional 38 grams of ethanol was added. The solvent mixture of the base copolymer solution was approximately 65 wt% ethanol and 35 wt% water and the solution included 5 wt% solids (DIAFIX/epoxyoctane).

Example 1 was formed by placing 12 grams of the 5% DIAFIX/epoxyoctane in 65:35 ethanol-water solution into a flask along with 0.9 gram of a 5 wt% solution of methylperfluorooctanoate in dioxolane. The ester should readily react with unreacted amine groups in the DIAFIX (approximately 12% of the original amine groups should be available based on the amount of epoxyoctane used). The amount of fluorocarbon added was chosen so that it would react with approximately 75% of the remaining unreacted amines.

Example 2 was formed by placing 12 grams of the 5% DIAFIX/epoxyoctane solution in 65:35 ethanol in a flask along with 0.45 gram of a 5% solution of methylheptafluoro-butyrate in dioxolane. The ester should readily react with unreacted amine groups in the polymer (approximately 12% of the original amine groups should be available based on the amount of epoxyoctane used). The amount of fluorocarbon added should react with approximately 75% of the remaining unreacted amines.

The coatings were somewhat hazy but could be clarified by addition of an acid such as acetic acid or carboxylic acid to lower the pH. Weak acids were preferred due to the likelihood they would be driven off during the drying process; strong acids may not be driven off during drying and may leave the polymer in salt form, altering the water solubility of the coating. Diprotic or higher acids were avoided due to the potential to cause coagulation of the solution.

### Antibacterial Properties

Examples 1 and 2 were Meyer Bar coated onto a polyethylene (PET) substrate using a number 4 rod. The coatings were dried for 1 hour at 110° C. The following test protocol, adapted from JIS Z2801 (Japanese Industrial Standard - Test for Antimicrobial Activity), was used to assess their antibacterial properties.

Approximately 4 cm x 4 cm squares of the test materials were placed into sterile Petri dishes. Duplicate test samples were each inoculated with 0.4 mL of the challenge organism in an aqueous suspension (*Staphylococcus aureus* ATCC #6538 or *Pseudomonas aeruginosa* ATCC#9027 diluted 1:5000 from overnight cultures into 0.2% tryptic soy broth (TSB) obtained from Becton, Dickinson and Co. (Sparks, MD)). 2 cm x 2 cm squares of polyester film were then placed onto the inoculum to ensure even surface coverage. A control sample (polyester film) that was similarly inoculated was harvested immediately as described below to establish the inoculum level (t = 0).

The test samples were then incubated 18 to 24 hours at 37°C in 80 percent relative humidity or higher. After incubation, each sample was removed from its Petri dish and was transferred into 10 mL sterile Difco Dey Engley Neutralizing Broth (NB) obtained from Becton, Dickinson and Co. The neutralizing broth was used to neutralize the antimicrobial agents so that they would not inhibit the growth of the remaining live bacteria. The tubes containing the NB and test material were placed into an ultrasonic bath for 60 seconds then mixed for 60 seconds via vortexing to release the bacteria from the materials into the NB.

Viable bacteria were enumerated by diluting the NB with phosphate-buffered saline (PBS) then plating, incubating and counting. The PBS contained KH₂PO₄ (0.24 grams), Na₂HPO₄ (1.44 grams), NaCl (8 grams), and KCl (0.2 grams) per liter with the pH adjusted to 7.2. The solution was plated onto TSB agar. The plates were incubated at 37°C for 24 to 48 hours and then the colony forming units (CFU's) were counted. Sensitivity limit for this test method was deemed to be 10 CFU/sample. The results of the JIS Z2801 tests for antimicrobial activity are summarized in Tables 1, 2 and 3.

**Table 1**

| Log unit reductions of *S. aureus* and *P. aeruginosa* on coatings after 24h | | |
|---|---|---|
| | *Staphylococcus aureus* | *Pseudomonas aeruginosa* |
| PET control | -1.2 | -1.5 |
| Example 1 | 4.5 | 5.0 |
| Example 2 | 4.5 | 5.0 |

**Table 2**

| Counts of colony forming units of *S. aureus* recovered from samples after 24h | | | | |
|---|---|---|---|---|
| *S. aureus* | t=0 | control | Example 2 | Example 1 |
| CFU/sample | 340000 | 5350000 | 10* | 10* |
| SD CPU/sample | 0 | 1060660 | 7 | 0 |

| | | | | |
|---|---|---|---|---|
| *Sensitivity limit of test | | | | |

**Table 3**

| Counts of colony forming units of *P. aeruginosa* recovered from samples after 24h | | | | |
|---|---|---|---|---|
| *P. aeruginosa* | t=0 | control | Example 2 | Example 1 |
| CFU/sample | 1100000 | 35500000 | 10* | 10* |
| SD CFU/sample | 0 | 4949747 | 0 | 0 |

| | | | | |
|---|---|---|---|---|
| *Sensitivity limit of test | | | | |

The results from antibacterial testing (Tables 1, 2 and 3) indicate that both polymers coated onto PET film effectively reduced *S*. *aureus* by more than four log units, or >99.99% and *P. aeruginosa* by more than five log units, or >99.999%.

### Antifungal Properties

Using a dropper, coatings of example 1 and example 2 were applied to pieces of Whatman number 4 filter paper (cat no. 1004-055). Additionally, examples 1 and 2 were each coated on a section of 100% vinyl shower curtain (mainSTAYS™ home, Wal-Mart Stores, Inc.) using a #4 Meyer rod. Control samples for the filter paper and vinyl shower curtain were prepared using ethanol coating alone. After application, all coatings were cured for 3 hours in a drying oven set at 100C.

The following test protocol, adapted from ASTM G21-96, was used to assess the antifungal properties of examples 1 and 2, coated as described above. Samples that were approximately 1 square inch were placed coated-side up onto solidified nutrient salts agar. The composition of nutrient salts agar was (per liter): 0.7g potassium dihydrogen orthophosphate (KH₂PO₄), 0.7 g potassium monohydrogen orthophosphate (K₂HPO₄), 0.7g magnesium sulfate (MgSO₄.7H₂O), 1.0g ammonium nitrate (NH₄NO₃), 5 mg sodium chloride (NaCl), 2 mg ferrous sulfate (FeSO₄.7H₂O), 2 mg zinc sulfate (ZnSO₄.7H₂O), 1 mg manganese sulfate (MnSO₄.H₂O) and 15 g Difco granulated agar. The nutrient salts agar medium was prepared by combining the listed ingredients with 1L ultrapure water and autoclaving for 20 minutes at 121C.

A mixed spore inoculum of approximately 10⁶ spores/mL in water was prepared. Fungal species included in the inoculum were: *Aspergillus niger* (ATCC# 16404), *Penicillium funiculosum* (ATCC# 11797), *Chaetomium globosum* (ATCC# 6205), *Trichoderma virens* (ATCC# 9645), *Aureobasidium pullulans* (ATCC# 15233), *Cladosporium herbar*um (ATCC# 76226). This spore suspension was placed into a standard spray bottle, and the sample(s) were inoculated by spraying the inoculum over the surface until the entire area was moistened.

The inoculated samples were incubated at 28°C for 28 days at no less than 85% relative humidity. The samples were then rated according to the following scale: no growth on sample as '0'; traces of growth with less than 10% coverage as '1'; light growth covering 10-30% of the substrate as '2'; medium to moderate growth covering 30-60% of the substrate as '3'; and heavy growth covering 60-100% as '4'. These qualitative ratings demonstrate the propensity of a material to support fungal growth and the ability of a treatment to prevent or reduce that growth relative to the control.

**Table 4**

| Ratings of fungal growth on substrate controls vs. coated substrates | | |
|---|---|---|
| | Filter Paper | Vinyl Shower Curtain |
| Control | 4 | 1 |
| Example 1 | 1 | 0 |
| Example 2 | 1 | 0 |

Growth was significantly inhibited on the filter paper substrate compared to the control. The vinyl shower curtain control showed only minimal fungal growth, but when coated with either example 1 or 2, no growth was observed.

### Water Repellent Properties

Examples 1 and 2 were tested for hydrophobicity using ultrapure water in a VCA Optima goniometer (AST Products, Billerica, MA). Coatings of both polymers were prepared on a Teflon sheet, on a polyethylene terephthalate (PET) sheet, on a glass microscope slide (washed in 1N NaOH) and on a cotton wipe (Tex-Wipe TX 309). Contact angle measurements were taken on the substrate alone and on the coated substrate in two different locations on two different coating preparations for Examples 1 and 2. The data is summarized in Table 5.

**Tablet 5**

| Contact angle measurements of water on uncoated substrates vs. coated substrates | | | | |
|---|---|---|---|---|
| Substrate | Test Sample | Average | Standard Deviation | Percent increase in hydrophobicity |
| PET | Uncoated | 81.0 | 0.5 | - |
| | Example 1 | 100.0 | 2.2 | 19.0 |
| | Example 2 | 88.6 | 1.9 | 8.6 |
| Glass | Uncoated | 19.6 | 2.0 | - |
| | Example 1 | 106.9 | 1.2 | 81.7 |
| | Example 2 | 87.8 | 2.0 | 77.7 |
| Teflon | Uncoated | 111.5 | 0.8 | - |
| | Example 1 | 103.5 | 0.8 | -7.7 |
| | Example 2 | 87.6 | 1.1 | -27.2 |
| Cotton Wipe | Uncoated | ND | ND | - |
| | Example 1 | 120.5 | 0.8 | >99 |
| | Example 2 | 126.2 | 1.5 | >99 |

These data demonstrate that when either Example 1 or Example 2 is coated onto PET, the contact angle increases by 19% and 8.6% respectively, indicating the coated PET is slightly more hydrophobic. The difference is far more significant on glass wherein Examples 1 and 2 increased the contact angle by 81.7% and 77.7% respectively. This demonstrates that these coatings confer water-repellant properties to a hydrophilic substrate. Teflon was also tested, and in this case the coated substrate was slightly less hydrophobic than the substrate by 7.7% for Example 1 and by 27.2% for Example 2. This indicates that a very hydrophobic material such as Teflon will be made slightly more hydrophilic by coating with either example 1 or 2. Finally, the cotton wipe was coated and tested. The uncoated textile absorbed water, making it impossible to measure contact angle, but after coating, water beaded up on the surface of the cotton wipe with contact angles greater than 120 degrees, demonstrating the utility of this material in providing a water-repellent property to textiles.

Thus, embodiments of antimicrobial compositions and articles are disclosed. One skilled in the art will appreciate that the present disclosure can be practiced with embodiments other than those disclosed. The disclosed embodiments are presented for purposes of illustration and not limitation, and the present disclosure is limited only by the claims that follow.

## Claims

1. A composition comprising the reaction product of at least
a vinylamine-vinyl alcohol copolymer;
an epoxyalkane; and
a fluorocarbon comprising a reactive portion capable of reacting with the vinylamine-vinyl alcohol copolymer,
wherein the molar amount of the combination of the epoxyalkane and the fluorocarbon is less than or equal to the molar amount of the vinylamine.

2. The composition according to claim 1, wherein the vinylamine-vinyl alcohol copolymer has a molar ratio of vinylamine units to vinyl alcohol units of from 1:99 to 50:50.

3. The composition according to claim 1, wherein the vinylamine-vinyl alcohol copolymer has a molar ratio of vinylamine units to vinyl alcohol units of from 5:95 to 50:50.

4. The composition according to claim 1, wherein the epoxyalkane is a C₄ to C₁₈ epoxyalkane.

5. The composition according to claim 1, wherein the epoxyalkane is a C₈ to C₁₂ epoxyalkane.

6. The composition according to claim 1, wherein the fluorocarbon is an ester, carboxylic acid, or epoxy having a C₄ to C₁₈ fluorocarbon group.

7. The composition according to claim 1, wherein the fluorocarbon is an ester having a fluorocarbon group.

8. The composition according to claim 1, wherein the molar ratio of epoxyalkane to fluorocarbon is from 4:1 to 1:1.

9. The composition according to claim 1 further comprising at least one solvent.

10. The composition according to claim 1 further comprising at least one acid.

11. The composition according to claim 1 further comprising at least one metal ion.

12. An article comprising:
a substrate;
a coating adjacent to the substrate, the coating comprising the reaction product of at least
a vinylamine-vinyl alcohol copolymer;
an epoxyalkane; and
a fluorocarbon comprising a reactive portion capable of reacting with the vinylamine-vinyl alcohol copolymer,
wherein the molar amount of the combination of the epoxyalkane and the fluorocarbon is less than or equal to the molar amount of the vinylamine.

13. The article according to claim 12, wherein the coating is crosslinked.

14. A method of preparing an antimicrobial polymeric material, the method comprising:
forming a vinylamine-vinyl alcohol copolymer solution in a cosolvent, the cosolvent comprising water and a first polar organic solvent;
adding an epoxyalkane to the vinylamine-vinyl alcohol copolymer solution, forming a reaction solution;
adding a fluorocarbon to the reaction solution, the fluorocarbon comprising a reactive portion capable of reacting with the vinylamine-vinyl alcohol copolymer, wherein the molar amount of the combination of the epoxyalkane and the fluorocarbon is less than or equal to the molar amount of the vinylamine,
adding further polar organic solvent to the reaction solution,
wherein the further polar organic solvent is added in order to maintain solubility of the components in the reaction solution.

15. The method according to claim 14, wherein the fluorocarbon is an ester with a C₄ to C₁₈ fluorocarbon group.

## Patentansprüche

1. Zusammensetzung, umfassend das Reaktionsprodukt von wenigstens
einem Vinylamin-Vinylalkohol-Copolymer;
einem Epoxyalkan; und
einem Fluorkohlenwasserstoff, umfassend einen reaktiven Teil, der in der Lage ist, mit dem Vinylamin-Vinylalkohol-Copolymer zu reagieren,
wobei die Molmenge der Kombination des Epoxyalkans und des Fluorkohlenwasserstoffs kleiner oder gleich der Molmenge des Vinylamins ist.

2. Zusammensetzung nach Anspruch 1, wobei das Vinylamin-Vinylalkohol-Copolymer ein Molverhältnis von Vinylamin-Einheiten zu Vinylalkohol-Einheiten von 1:99 bis 50:50 aufweist.

3. Zusammensetzung nach Anspruch 1, wobei das Vinylamin-Vinylalkohol-Copolymer ein Molverhältnis von Vinylamin-Einheiten zu Vinylalkohol-Einheiten von 5:95 bis 50:50 aufweist.

4. Zusammensetzung nach Anspruch 1, wobei das Epoxyalkan ein C₄- bis C₁₈-Epoxyalkan ist.

5. Zusammensetzung nach Anspruch 1, wobei das Epoxyalkan ein C₈- bis C₁₂-Epoxyalkan ist.

6. Zusammensetzung nach Anspruch 1, wobei der Fluorkohlenwasserstoff ein Ester, eine Carbonsäure oder ein Epoxy mit einer C₄- bis C₁₈-Fluorkohlenwasserstoffgruppe ist.

7. Zusammensetzung nach Anspruch 1, wobei der Fluorkohlenwasserstoff ein Ester mit einer Fluorkohlenwasserstoffgruppe ist.

8. Zusammensetzung nach Anspruch 1, wobei das Molverhältnis von Epoxyalkan zu Fluorkohlenwasserstoff von 4:1 bis 1:1 beträgt.

9. Zusammensetzung nach Anspruch 1, ferner umfassend mindestens ein Lösungsmittel.

10. Zusammensetzung nach Anspruch 1, ferner umfassend mindestens eine Säure.

11. Zusammensetzung nach Anspruch 1, ferner umfassend mindestens ein Metallion.

12. Artikel, umfassend:
ein Substrat;
eine an das Substrat angrenzende Beschichtung, wobei die Beschichtung das Reaktionsprodukt von wenigstens einem Vinylamin-Vinylalkohol-Copolymer;
einem Epoxyalkan; und
einem Fluorkohlenwasserstoff, umfassend einen reaktiven Teil, der in der Lage ist, mit dem Vinylamin-Vinylalkohol-Copolymer zu reagieren, umfasst,
wobei die Molmenge der Kombination des Epoxyalkans und des Fluorkohlenwasserstoffs kleiner oder gleich der Molmenge des Vinylamins ist.

13. Artikel nach Anspruch 12, wobei die Beschichtung vernetzt ist.

14. Verfahren zur Herstellung eines antimikrobiellen Polymermaterials, wobei das Verfahren Folgendes umfasst:
Bilden einer Vinylamin-Vinylalkohol-Copolymer-Lösung in einem Hilfslösungsmittel, wobei das Hilfslösungsmittel Wasser und ein erstes polares organisches Lösungsmittel umfasst;
Hinzugeben eines Epoxyalkans zu der Vinylamin-Vinylalkohol-Copolymer-Lösung unter Bildung einer Reaktionslösung;
Hinzugeben eines Fluorkohlenwasserstoffs zu der Reaktionslösung, wobei der Fluorkohlenwasserstoff einen reaktiven Teil umfasst, der in der Lage ist, mit dem Vinylamin-Vinylalkohol-Copolymer zu reagieren, wobei die Molmenge der Kombination des Epoxyalkans und des Fluorkohlenwasserstoffs kleiner oder gleich der Molmenge des Vinylamins ist,
Hinzugeben von weiterem polarem organischem Lösungsmittel zu der Reaktionslösung,
wobei das weitere polare organische Lösungsmittel hinzugegeben wird, um die Löslichkeit der Bestandteile in der Reaktionslösung aufrechtzuerhalten.

15. Verfahren nach Anspruch 14, wobei der Fluorkohlenwasserstoff ein Ester mit einer C₄- bis C₁₈-Fluorkohlenwasserstoffgruppe ist.

## Revendications

1. Composition comprenant le produit de réaction d'au moins
un copolymère de vinylamine-alcool vinylique ;
un époxyalcane ; et
un fluorocarbone comprenant une partie réactive pouvant réagir avec le copolymère de vinylamine-alcool vinylique,
dans laquelle la quantité molaire de la combinaison de l'époxyalcane et du fluorocarbone est inférieure ou égale à la quantité molaire du vinylamine.

2. Composition selon la revendication 1, dans laquelle le copolymère de vinylamine-alcool vinylique présente un rapport molaire des unités de vinylamine aux unités d'alcool vinylique de 1:99 à 50:50.

3. Composition selon la revendication 1, dans laquelle le copolymère de vinylamine-alcool vinylique présente un rapport molaire des unités de vinylamine aux unités d'alcool vinylique de 5:95 à 50:50.

4. Composition selon la revendication 1, dans laquelle l'époxyalcane est un époxyalcane en C₄ à C₁₈.

5. Composition selon la revendication 1, dans laquelle l'époxyalcane est un époxyalcane en C₈ à C₁₂.

6. Composition selon la revendication 1, dans laquelle le fluorocarbone est un ester, un acide carboxylique ou un époxy présentant un groupe fluorocarboné en C₄ à C₁₈.

7. Composition selon la revendication 1, dans laquelle le fluorocarbone est un ester présentant un groupe fluorocarboné.

8. Composition selon la revendication 1, dans laquelle le rapport molaire de l'époxyalcane au fluorocarbone est de 4:1 à 1:1.

9. Composition selon la revendication 1, comprenant en outre au moins un solvant.

10. Composition selon la revendication 1, comprenant en outre au moins acide.

11. Composition selon la revendication 1, comprenant en outre au moins un ion métallique.

12. Article comprenant :
un substrat ;
un revêtement adjacent au substrat, le revêtement comprenant le produit de réaction
d'au moins un copolymère de vinylamine-alcool vinylique ;
un époxyalcane ; et
un fluorocarbone comprenant une partie réactive pouvant réagir avec le copolymère de vinylamine-alcool vinylique,
la quantité molaire de la combinaison de l'époxyalcane et du fluorocarbone étant inférieure ou égale à la quantité molaire de vinylamine.

13. Article selon la revendication 12, dans lequel le revêtement est réticulé.

14. Procédé de préparation d'un matériau polymère antimicrobien, le procédé comprenant :
la formation d'une solution de copolymère de vinylamine-alcool vinylique dans un cosolvant, le cosolvant comprenant de l'eau et un premier solvant organique polaire ;
l'addition d'un époxyalcane à la solution de copolymère de vinylamine-alcool vinylique, avec formation d'une solution réactionnelle ;
l'addition d'un fluorocarbone à la solution réactionnelle, le fluorocarbone comprenant une partie réactive pouvant réagir avec le copolymère de vinylamine-alcool vinylique, la quantité molaire de la combinaison de l'époxyalcane et du fluorocarbone étant inférieure ou égale à la quantité molaire de la vinylamine,
l'addition de solvant organique polaire supplémentaire à la solution réactionnelle,
le solvant organique polaire supplémentaire étant ajouté afin de maintenir la solubilité des constituants dans la solution réactionnelle.

15. Procédé selon la revendication 14, dans lequel le fluorocarbone est un ester présentant un groupe fluorocarboné en C₄ à C₁₈.
